Europäisches Patentamt

European Patent Office

Office européen des brevets

(11) Publication number: **0 451 916 A2**

# EUROPEAN PATENT APPLICATION

(21) Application number: 91200821.6

(51) Int. Cl.5: **B60R 19/02**

(22) Date of filing: 09.04.91

(30) Priority: **10.04.90 IT 1997890**

(43) Date of publication of application:
**16.10.91 Bulletin 91/42**

(84) Designated Contracting States:
**DE ES FR GB SE**

(71) Applicant: **ALFA LANCIA S.p.A.**
**Viale Alfa Romeo**
**I-20020 Arese, Milan(IT)**

(72) Inventor: **Mendicino, Franco**
**Via Mazzini 5**
**I-20020 Arese, Milan(IT)**

(74) Representative: **De Carli, Erberto et al**
**ING. BARZANO' & ZANARDO MILANO S.p.A.**
**Via Borgonuovo, 10**
**I-20121 Milano(IT)**

(54) Air intake for engine feed.

(57) An air intake for engine feed, in which a tubular structure is associated with the cross-member of a vehicle body and, via a port connected to an aperture in the cross-member, draws in atmospheric air in order to convey it, along a path external to the engine compartment, to an induction structure provided within this latter, the tubular structure acting as a stiffening frame for the bumper.

Fig.1

EP 0 451 916 A2

This invention relates to an air intake for engine feed.

Air intakes are known to be provided in plastic and non-plastic bumpers, in which the provided air intakes direct flow towards the radiator and/or towards the brakes.

Bumpers of tubular or box structure are known which are structurally designed to absorb a large quantity of energy arising from impact, these bumpers being generally fixed to the vehicle fairing or spoiler.

There is a known problem in extending the engine air intake for the purpose of reducing induction noise without penalizing the delivered power or at least with minimization of power loss. For thermodynamic reasons this extension should be external to the vehicle, and in particular external to the engine compartment.

An object of the present invention is to solve the described technical problem by utilizing the ideal position of the front bumper, which has generally never been associated with the engine air intake, this usually being in the form of a tubular element without any incorporation into the bumper.

A further object is to provide an engine induction air conveying element which also performs the function of a stiffening and impact energy absorption frame for the bumper.

These objects are attained according to the invention by an air intake in which a tubular structure and an external bumper member are associated with a vehicle body structural support element provided with a plurality of apertures, characterised in that said tubular structure is a stiffening structure for said external bumper member, and is provided internally with a duct connected at one end to a first of said apertures provided in said structural element of said body and at the other end to a second of said apertures, which communicates with a conduit for feeding air to an engine contained within said body.

According to one embodiment of the present invention said tubular structure is an element of blow-moulded plastic material.

Again according to the invention said tubular stiffening structure provided with said internal duct draws in atmospheric air.

In addition said tubular structure is provided with sealing sleeves for connecting said duct to said apertures provided in said structural element of said body.

In a preferred embodiment of the present invention said tubular structure draws air from the interior of the engine compartment via a conduit provided within said structural element of said body.

The technical characteristics and further advantages of the present invention are illustrated hereinafter with reference to the accompanying drawings, in which:

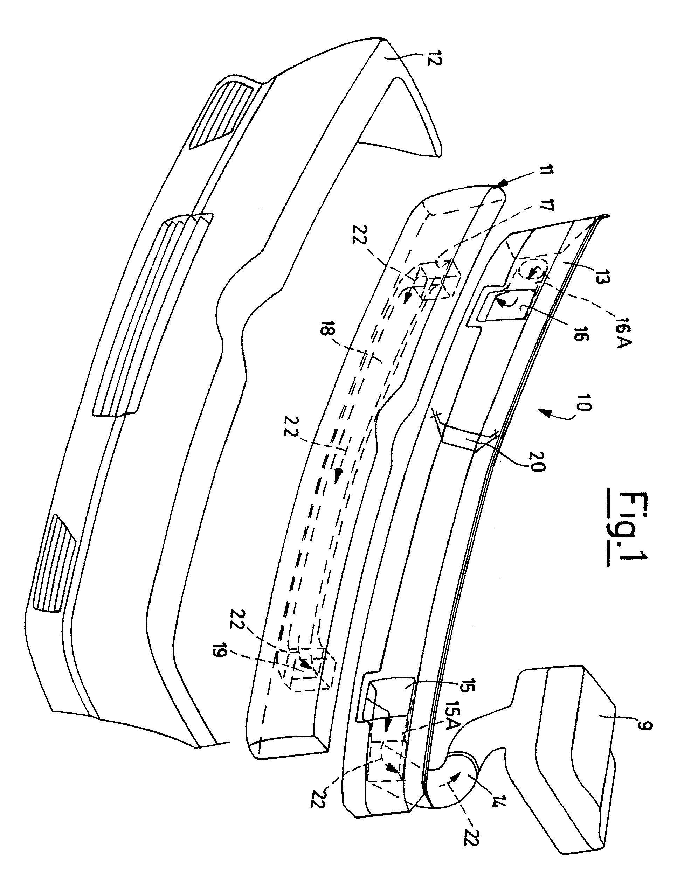

Figure 1 is a schematic perspective view of the component elements of the air intake of the present invention; and

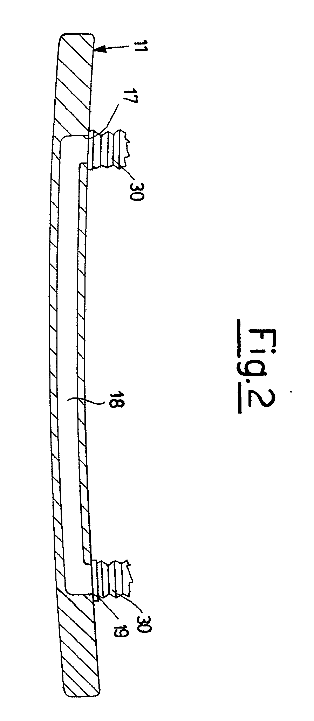

Figure 2 is a section through an element of Figure 1.

In the figures the reference numeral 11 indicates overall a tubular stiffening structure for the external part 12 of a vehicle bumper.

The tubular structure 11 is fixed onto a cross-member 13 of a vehicle body (not shown). The body defines an engine compartment, indicated schematically by 10, housing an engine (also not shown) comprising an air induction structure 9 provided with a pipe 14 connected to a pair of apertures 15, which are themselves connected together by a conduit 15A and are provided at one end of the cross-member 13, at the other end of the cross-member there being provided a further pair of apertures/16 connected together by a conduit 16A in communication with the engine compartment 10 and able to convey air towards the tubular stiffening structure 11.

This latter is provided with a first port 17 in correspondence with and in communication with an aperture 16, an internal duct 18 and a second port 19 in communication with an aperture 15 and consequently with the pipe 14.

Sealing sleeves 30 can be provided between the ports 17 and 19 and the apertures 15 and 16.

On the cross-member 13 in proximity to the aperture 16 there is provided a wall 20 able to block the air streams which would otherwise be channelled into the box section of the cross-member instead of into the tubular structure 11.

The air can be drawn in either from the interior of the engine compartment 10 via the aperture 16 and through the port 17 in the direction of the arrows 22, or in the form of atmospheric air taken either from the cross-member or directly from the outside. The air passes through the internal duct 18 to emerge from the second port 19 in communication with the pipe 14 and hence reach the air induction structure 9.

In this manner the engine induction air follows a longer path equal to the entire length of the tubular element 11, passing external to the engine compartment 10 within a cold duct.

This arrangement also results in a considerable weight saving, in that the bumper structure also combines the air induction function, with the advantage of greater space availability within the engine compartment and a cleaner overall vehicle appearance.

The present invention has been described by way of non-limiting example and modifications can be made thereto by the expert of the art, but without leaving the scope of protection of the present patent.

## Claims

1. An air intake in which a tubular structure and an external bumper member are associated with a vehicle body structural support element provided with a plurality of apertures, characterised in that said tubular structure is a stiffening structure for said external bumper member, and is provided internally with a duct connected at one end to a first of said apertures provided in said structural element of said body and at the other end to a second of said apertures, which communicates with a conduit for feeding air to an engine contained within said body.

2. An air intake as claimed in claim 1, characterised in that said tubular structure is an element of blow-moulded plastic material.

3. An air intake as claimed in claim 1, characterised in that said tubular stiffening structure provided with said internal duct draws in atmospheric air.

4. An air intake as claimed in claim 1, characterised in that said tubular structure is provided with sealing sleeves for connecting said duct to said apertures provided in said structural element of said body.

5. An air intake as claimed in claim 1, characterised in that said tubular structure draws air from the interior of the engine compartment via a conduit provided within said structural element of said body.

Fig.1

Fig.2